# EUROPEAN PATENT SPECIFICATION

(11) **EP 3 659 294 B1**
(45) Date of publication and mention of the grant of the patent: **13.05.2026**
(21) Application number: 17745344.6
(22) Date of filing: 28.07.2017
(51) Int. Cl.: H04L 9/14, H04L 9/40

(54) **SECURE MESSAGING**
SICHERE NACHRICHTENÜBERMITTLUNG
MESSAGERIE SÉCURISÉE

(43) Date of publication of application: 03.06.2020
(73) Proprietor: KOBIL GmbH, 67547 Worms (DE)
(72) Inventor: KOYUN, Ismet, 67550 Worms (DE); SARIHAN, Tan, Potomac, Maryland 20854 (US)
(74) Representative: Cohausz & Florack
(86) International application number: PCT/EP2017/069208
(87) International publication number: WO 2019/020197

(56) References cited:
- US-A1- 2002 191 797
- US-A1- 2016 315 918
- US-B1- 7 961 879

## Description

### FIELD

The invention relates to the field of secure messaging and more specifically for sending and/or receiving a secure message.

### BACKGROUND

For secure messaging, messages may be encrypted in an asymmetric cryptography system today by use of a public key of an asymmetric key pair of the recipient. Since only the recipient knows the private key of his asymmetric key pair, only the recipient can decrypt and, thus, access the message. US7961879B1 discloses an example of secure messaging.

### SUMMARY OF SOME EMBODIMENTS OF THE INVENTION

According to a first aspect of the invention, a method performed by an apparatus is presented, which comprises:
- obtaining a payload information item that is to be communicated to at least one recipient,
- obtaining an encrypted payload information item by encrypting the payload information item such that it is decryptable by use of a first decryption key,
- obtaining an encrypted first decryption key by encrypting the first decryption key such that it is decryptable by use of a second decryption key which is not known by the at least one recipient, and
- sending or triggering sending a message containing the encrypted payload information item and the encrypted first decryption key to the at least one recipient.

According to the first aspect of the invention, an apparatus is presented, which comprises means for performing the method according to the first aspect of the invention. For example, the method according to the first aspect of the invention may be a method performed by the apparatus according to the first aspect of the invention.

The apparatus and the method according to the first aspect of the invention may be for secure messaging, for example for sending a secure message.

The apparatus according to the first aspect of the invention may be or may be part of a device such as a sender device or a server device (e.g. a key server device), for example a sender device or a server device for a messaging system (e.g. the system according to the third aspect of the invention). Alternatively, the apparatus according to the first aspect of the invention may comprise or may be formed by one or more devices such as a sender device and/or a server device (e.g. a key server device), for example a sender device and/or a server device for a messaging system (e.g. the system according to the third aspect of the invention).

According to the first aspect of the invention, a computer program code is presented, the computer program code when executed by a processor causing an apparatus to perform the actions of the method according to first aspect of the invention.

According to the first aspect of the invention, a computer readable storage medium (e.g. a tangible and/or non-transitory computer readable storage medium) is presented, in which the computer program code according to the first aspect of the invention is stored.

According to a second aspect of the invention, a method performed by an apparatus is presented, which comprises:
- receiving a message containing an encrypted payload information item that is decryptable by use of a first decryption key, the message further containing an encrypted first decryption key that is decryptable by use of a second decryption key,
- obtaining the second decryption key,
- obtaining the first decryption key by decrypting the encrypted first decryption key by use of the second decryption key, and
- decrypting the encrypted payload information item by use of the first decryption key.

According to the second aspect of the invention, an apparatus is presented, which comprises means for performing the method according to the second aspect of the invention. For example, the method according to the second aspect of the invention may be a method performed by the apparatus according to the second aspect of the invention.

The apparatus and the method according to the second aspect of the invention may be for secure messaging, for example for receiving a secure message.

The apparatus according to the second aspect of the invention may be or may be part of a device such as a recipient device or a client device, for example a recipient device or a client device for a messaging system (e.g. the system according to the third aspect of the invention). Alternatively, the apparatus according to the second aspect of the invention may comprise or may be formed by one or more devices such as a recipient device (e.g. a user device) and/or a client device, for example a recipient device (e.g. a user device) and/or a client device for a messaging system (e.g. the system according to the third aspect of the invention).

According to the second aspect of the invention, a computer program code is presented, the computer program code when executed by a processor causing an apparatus to perform the actions of the method according to second aspect of the invention.

According to the second aspect of the invention, a computer readable storage medium (e.g. a tangible and/or non-transitory computer readable storage medium) is presented, in which the computer program code according to the second aspect of the invention is stored.

According to a third aspect of the invention, a method is presented, which comprises the actions of the methods according to the first aspect of the invention and the second aspect of the invention. The method according to the third aspect of the invention may be a method performed in a messaging system (e.g. the system according to the third aspect of the invention).

According to the third aspect of the invention, a system is presented, which comprises at least one apparatus according to the first aspect of the invention and at least one apparatus according to the second aspect of the invention. The system according to the third aspect of the invention may be a messaging system (e.g. a secure messaging system).

In the following, the first, second and third aspects of the invention are - at least partially exemplary - described.

The payload information item (e.g. the payload information item in an unencrypted form) may for example be at least partially obtained by capturing the payload information item (e.g. by a user input means such as a user interface) and/or by receiving the payload information item (e.g. by communication means such as a communication interface) and/or by determining the payload information item (e.g. by determining means such as a processor). To this end, the apparatus performing the method according to the first aspect of the invention (e.g. the apparatus according to the first aspect of the invention) may comprise user input means (e.g. a user interface) and/or communication means (e.g. a communication interface) and/or a determining means (e.g. a processor) and/or sensing means (e.g. a sensor).

A payload information item may represent information that is to be communicated from a sender to at least one recipient. For example, the payload information item may represent information necessary to perform one or more business processes such as a payment process or a booking process. Accordingly, the encrypted payload information item may represent such information in encrypted form.

A sender may be understood to mean a person (e.g. a user) and/or an organization (e.g. a company such as a service provider company) and/or another entity (e.g. a device or a computer program or application) from which the message containing the encrypted payload information item and the encrypted first decryption key is sent and/or which triggers (e.g. initiates or controls) sending the message.

A payload information item may be understood to be accessible if it is in an unencrypted form. Accessing an encrypted payload information item may thus be understood to mean that the encrypted payload information item is decrypted.

Encrypting the payload information item may be understood to mean that an cryptography algorithm (e.g. an encryption algorithm) is applied to the payload information item; and decrypting the encrypted payload information item may be understood to mean that a cryptography algorithm (e.g. a decryption algorithm) is applied to the encrypted payload information item.

As a result of encrypting the payload information the encrypted payload information item may be obtained. Therein, encrypting the payload information item such that it is decryptable by use of a first decryption key may mean that for decrypting the encrypted payload information item the first decryption key must be used. Decrypting the encrypted payload information item by use of the first decryption key may mean that the first decryption key is used for decrypting the encrypted payload information item. As a result of decrypting the encrypted payload information item the payload information item may be obtained in unencrypted form.

Similarly, as a result of encrypting the first decryption key the encrypted first decryption key may be obtained. Therein, encrypting the first decryption key such that it is decryptable by use of a second decryption key may mean that for decrypting the encrypted first decryption key the second decryption key must be used. Decrypting the encrypted first decryption key by use of the second decryption key may mean that the second decryption key is used for decrypting the encrypted first decryption key. As a result of decrypting the encrypted first decryption key the first decryption key may be obtained in unencrypted form.

The first decryption key and the second decryption key may be different.

The second decryption key may be understood to be not known by the at least one recipient, if the second decryption key is not available to or accessible by the at least one recipient before sending the message to the at least one recipient. For example, the second decryption key may be selected from a codebook or randomly generated or pseudo-randomly generated to avoid that the decryption key is known by the at least one recipient. Alternatively or additionally, the second decryption key may be kept secret before sending the message to the at least one recipient to avoid that the decryption key is known by the at least one recipient.

This may have the effect that access to the payload information item may be controlled by controlling access to the second decryption key. Accordingly, a recipient (e.g. the at least one recipient) may only access the payload information item if the recipient has access to the second decryption key.

Obtaining the second decryption key according to the second aspect of the invention may be understood to mean that the second decryption key is received and/or accessed by the at least one recipient.

The message containing the encrypted payload information item and the encrypted first decryption key may be or may be part of a message according to a message standard such as the Internet Message Format (IMF) which is specified in RFC5322 of the Internet Engineering Task Force (IETF) and/or the Cryptographic Message Syntax (CMS) which is specified in RFC5652 of the IETF and/or XML format which is specified by World Wide Web Consortium (W3C) and/or JavaScript Object Notation (JSON) format which is for example specified in RFC7159 of the IETF .

The message may at least contain the encrypted payload information item and the encrypted first decryption key. In addition, the message may for example contain further information items for facilitating and/or controlling communication of the message such as header and/or metadata information items (e.g. a signature information item, a sender information item, a recipient information item, an encryption information item, and/or a message policy information item) and/or message identification string and/or idempotency string.

A recipient may be understood to mean a person (e.g. a user) and/or an organization (e.g. a company such as a service provider company) and/or another entity (e.g. a device or a computer program or application) to which the message is sent and/or which receives the message.

Sending the message containing the encrypted payload information item and the encrypted first decryption key to the recipient may be understood to mean that the message is sent such that it is receivable by the recipient and/or an apparatus of the recipient (e.g. the apparatus according to the second aspect of the invention). For example, the message may be addressed to the recipient and/or to an apparatus of the recipient (e.g. the apparatus according to the second aspect of the invention). For example, the message may comprise an address associated with the recipient (e.g. a recipient identifier and/or a recipient address such as an email address) and/or an address associated with an apparatus of the recipient (e.g. a device identifier and/or a device address such as an IP address and/or a phone number) as a recipient information item. For example, the message may be sent by the apparatus according to the first aspect of the invention. The message may for example be sent by communication means of the apparatus according to the first aspect of the invention, for example a communication interface such as a network interface.

Triggering sending the message containing the encrypted payload information item and the encrypted first decryption key to the recipient may for example be understood to mean that sending the message to the recipient is controlled by the apparatus performing the method according to the first aspect of the invention (e.g. the apparatus according to the first aspect of the invention). For example, the apparatus performing the method according to the first aspect of the invention (e.g. the apparatus according to the first aspect of the invention) may trigger (e.g. control) external communication means (e.g. communication means external to the apparatus according to the first aspect of the invention) to send the message.

For example, the message containing the encrypted payload information item and the encrypted first decryption key may be sent in a signal or as part of a signal (e.g. a communication signal) or in split parts spanning multiple signals. Accordingly, receiving the message containing the encrypted payload information item may be understood to mean that a signal (e.g. a communication signal) comprising the message or multiple signals having split parts of the message when together comprising the message is received and that the message is extracted from the received signal.

For example, the message containing the encrypted payload information item and the encrypted first decryption key is received by the apparatus according to the second aspect of the invention. For example, the message is received by communication means of the apparatus according to the second aspect of the invention, for example a communication interface such as a network interface.

The message containing the encrypted payload information item and the encrypted first decryption key may be sent and/or received via a communication link, for example a network link such as an internet link, a virtual private network link and/or a cellular network link. The communication link may be composed of one or more intermediate communication links and comprise one or more intermediate stations.

The means of the apparatuses according to the first and second aspect of the invention may be implemented in hardware and/or software. They may comprise for example at least one processor for executing computer program code for realizing the required functions, at least one memory storing the program code, or both. Alternatively, they could comprise for example circuitry that is designed to realize the required functions, for example implemented in a chipset or a chip, like an integrated circuit. In general, the means may comprise for example one or more processing means such as a processor and a memory. Optionally, the apparatuses may comprise various other components, like a communication interface (e.g. a network interface such as a network card), a user interface (e.g. a touch-sensitive display, a keyboard, a touchpad, a display, etc.) etc.

For example, the apparatus according to the first aspect of the invention may comprise at least one processor and at least one memory including computer program code, the at least one memory and the computer program code configured to, with the at least one processor, cause an apparatus at least to perform at least partially the method and/or the steps of the method according to the first aspect of the invention. Similarly, the apparatus according to the second aspect of the invention may comprise at least one processor and at least one memory including computer program code, the at least one memory and the computer program code configured to, with the at least one processor, cause an apparatus at least to perform at least partially the method and/or the steps of the method according to the second aspect of the invention.

As disclosed above, access to the encrypted payload information item may be controlled by controlling access to the second decryption key. For example, access to the second decryption key may be controlled by a sender of the message (or a device of the sender of the message, e.g. the apparatus according to the first aspect of the invention).

The present invention thus enables to control access to the encrypted payload information item by the sender. This for example allows the sender to withdraw the encrypted payload information item or to restrict access to the encrypted payload information item after the message containing the encrypted payload information item and the encrypted first decryption key has been sent to the at least one recipient.

In the following, the features of exemplary embodiments according to the invention are described by way of examples.

According to an exemplary embodiment of the invention, the message containing the encrypted payload information item and the encrypted first decryption key does not contain the second decryption key.

According to an exemplary embodiment of the invention, the encrypted payload information item and/or the encrypted first decryption key are decryptable by use of at least one asymmetric cryptography algorithm, at least one symmetric cryptography algorithm or a combination thereof.

As disclosed above, encrypting of the payload information item and/or the first decryption key may be understood to mean that a cryptography algorithm (e.g. an encryption algorithm) is applied to the payload information item and/or the first decryption key; and decrypting of the encrypted payload information item and/or the encrypted first decryption key may be understood to mean that a cryptography algorithm (e.g. a decryption algorithm) is applied to the encrypted payload information item and/or the encrypted first decryption key.

For example, the payload information item and the first decryption key may be encrypted by use of the same cryptography algorithm or by use of different cryptography algorithms.

In case the encrypted payload information items has been encrypted and/or is decryptable by use of an asymmetric cryptography algorithm, the first decryption key may be a private key of an asymmetric key pair. In case the encrypted payload information item has been encrypted and/or is decryptable by use of a symmetric cryptography algorithm, the first decryption key may be a symmetric key.

In case the encrypted first decryption key has been encrypted and/or is decryptable by use of an asymmetric cryptography algorithm, the second decryption key may be a private key of an asymmetric key pair. In case the encrypted first decryption key has been encrypted and/or is decryptable by use of a symmetric cryptography algorithm, the second decryption key may be a symmetric key.

An example of an asymmetric cryptography algorithm is the RSA-Algorithm (Rivest-Shamir-Adleman-Algorithm). The RSA-Algorithm is for example specified in Public-Key Cryptography Standards #1 (PKCS #1) as published by the RSA Laboratories. Exemplary symmetric cryptography algorithms are the Advanced Encryption Standard (AES-Algorithm) and the Triple Data Encryption Algorithm (3DEA-Algorithm). The AES-Algorithm and the 3DEA-Algorithm are for example specified by the U.S. National Institute of Standards and Technology (NIST).

In particular, the following four exemplary embodiments of the first aspect of the invention and corresponding embodiments of the second aspect of the invention are to be understood to be disclosed:
- the payload information item is encrypted by a symmetric cryptography algorithm and the first decryption key is encrypted by an asymmetric cryptography algorithm;
- the payload information item is encrypted by an asymmetric cryptography algorithm and the first decryption key is encrypted by a symmetric cryptography algorithm;
- the payload information item and the first decryption key are encrypted by an asymmetric cryptography algorithm;
- the payload information item and the first decryption key are encrypted by a symmetric cryptography algorithm.

According to an exemplary embodiment of the invention, the method of the first aspect of the invention further comprises:
- generating or triggering generating the first decryption key and/or the second decryption key.

Generating the first decryption key and/or the second decryption key may be understood to mean that the first decryption key and/or the second decryption key are generated at least partially based on a key generation algorithm such as a key derivation function and/or random number generator and/or a pseudo random number generator and/or a combination thereof.

Triggering generating the first decryption key and/or the second decryption key may for example be understood to mean that generating the first decryption key and/or the second decryption key is controlled by the apparatus performing the method according to the first aspect of the invention (e.g. the apparatus according to the first aspect of the invention). For example, the apparatus performing the method according to the first aspect of the invention (e.g. the apparatus according to the first aspect of the invention) may trigger (e.g. control) external means (e.g. an external hardware random number generator or an external key generator) to generate the first decryption key and/or the second decryption key.

Example pseudo random number generators are cryptographically secure pseudorandom number generators as specified in ANSI (American National Standards Institute) X9.17-1985 Appendix C, ANSI X9.31-1998 Appendix A.2.4 or ANSI X9.62-1998 Annex A.4. An example for a random number generator is a hardware random number generator such as the Intel's Secure Key Technology which describes the Intel 64 and IA-32 Architectures instructions RDRAND and RDSEED and the underlying Digital Random Number Generator (DRNG) hardware implementation.

A value generated by a random number generator and/or a pseudo random number generator may for example be used as a key (e.g. as first decryption key and/or second decryption key) or as an input value for a key generation algorithm and/or a key derivation function.

An example of a key derivation function is HKDF (HMAC (Hash-based message authentication code) based Key Derivation Function) as specified in Internet Engineering Task Force's RFC 5869 or PBKDF2 (Password-Based Key Derivation Function 2) as specified in Internet Engineering Task Force's RFC 2898.

A further example for a key generation algorithm to generate an asymmetric key pair for the RSA-Algorithm is for example specified in Public-Key Cryptography Standards #1 (PKCS #1) as published by the RSA Laboratories.

Alternatively or additionally, the method of the first aspect of the invention may further comprise:
- holding available the first decryption key and/or the second decryption key.

Holding available the first decryption key and/or the second decryption key may mean that the first decryption key and/or the second decryption key are stored, for example in memory means (e.g. of the apparatus performing the method according to the first aspect of the invention, e.g. the apparatus according to the first aspect of the invention). Example of memory means include a volatile memory and a non-volatile memory.

For example, a plurality of (e.g. pre-determined or previously generated) decryption keys which may be used as first decryption key and/or second decryption key may be hold available.

According to an exemplary embodiment of the invention, the first decryption key and/or the second decryption key are (or have been) generated at least partially based on a random number generator or a pseudo random number generator such that the first decryption key and/or the second decryption key are not known by the at least one recipient.

As described above, randomly or pseudo-randomly generating the first decryption key and/or the second decryption key may have the effect that it is avoided that the decryption key is known by the at least one recipient.

According to an exemplary embodiment of the invention, the first decryption key and/or the second decryption key are unique decryption keys and/or one-time decryption keys.

A unique decryption key may be understood to be a decryption key that is different from any other decryption key or at least from any other decryption key used in a messaging system (e.g. the system according to the third aspect of the invention).

A one-time decryption key may be understood to be a decryption key that is valid for only one decrypting action. For example, if the first decryption key is a one-time decryption key, it may only be used for decrypting the encrypted payload information once. Similarly, if the second decryption key is a one-time decryption key, it may only be used for decrypting the encrypted first decryption key once. For example, a user may only be allowed to access the first decryption key and/or the second decryption key once if the first decryption key and/or the second decryption key are one-time decryption keys.

According to an exemplary embodiment of the invention, the first decryption key and/or the second decryption key are only to be used by the at least one recipient. For example, only the at least one recipient may be allowed to access the first decryption key and/or the second decryption key such that the first decryption key and/or the second decryption key are only usable by the at least one recipient. This may have the effect that access to the encrypted payload information item can be controlled individually for the at least one recipient.

Alternatively or additionally, the first decryption key and/or the second decryption key are to be used by a plurality of recipients, wherein the at least one recipient is one of the plurality of recipients, and wherein the payload information item is to be communicated to the plurality of recipients. For example, all recipients of the plurality of recipients may be allowed to access the first decryption key and/or the second decryption key such that the first decryption key and/or the second decryption key are usable by all recipients of the plurality if recipients. This may have the effect that access to the encrypted payload information item can be controlled for the plurality of recipients.

In particular, the following five exemplary embodiments are to be understood to be disclosed:
- the first decryption key and the second decryption key are unique one-time decryption keys which are only to be used by the at least one recipient, wherein the payload information item is only to be communicated to the at least one recipient;
- the first decryption key is a unique one-time decryption key which is to be used by a plurality of recipients and the second decryption key is a unique one-time decryption key which is only to be used by the at least one recipient, wherein the at least one recipient is one recipient of the plurality of recipients, and wherein the payload information item is to be communicated to the plurality of recipients;
- the first decryption key is a unique one-time decryption key which is only to be used by the at least one recipient and the second decryption key is a unique one-time decryption key which is to be used by a plurality of recipients, wherein the at least one recipient is one recipient of the plurality of recipients, and wherein the payload information item is to be communicated to the plurality of recipients;
- the first decryption key and the second decryption key are unique one-time decryption keys which are only to be used by a plurality of recipients, wherein the at least one recipient is one recipient of the plurality of recipients, and wherein the payload information item is to be communicated to the plurality of recipients;
- the first decryption key and the second decryption key are a unique one-time decryption keys which are only to be used by the at least one recipient, wherein the at least one recipient is one recipient of a plurality of recipients, and wherein the payload information item is to be communicated to the plurality of recipients.

For example, in case the payload information item is to be communicated to a plurality of recipients, for each recipient of the plurality of recipients a respective second decryption key which is only to be used by the respective recipient of the plurality of recipients may be generated. For example, a unique second decryption key is generated for each recipient of the plurality of recipients. In this case, the first decryption key may be the same for all recipients of the plurality of recipients. This may be advantageous to enable to control access to the first decryption key and, thus, to the encrypted payload information item by controlling access to the respective second decryption key. Alternatively, for each recipient of the plurality of recipients a respective first decryption key which is to be used only by the respective recipient of the plurality of recipients may be generated. For example, a unique first decryption key is generated for each recipient of the plurality of recipients. Since the first decryption key is different for each recipient of the plurality of recipients, this may avoid a circumvention of the access control by sharing of the first decryption key. According to an exemplary embodiment of the invention, the method of the first aspect of the invention further comprises:
- receiving a request for the second decryption key from the at least one recipient,
- sending or triggering sending the second decryption key to the at least one recipient in response to the request.

Furthermore, the second decryption key may be obtained according to the method according to the second aspect of the invention by:
- sending or triggering sending a request for the second decryption key to a sender of the message containing the encrypted payload information item and the encrypted first decryption key, and
- receiving the second decryption key from the sender in response to the request.

Sending the request to the sender may be understood to mean that the request is sent such that it is receivable by the sender and/or an apparatus of the sender used for sending the message (e.g. the apparatus according to the first aspect of the invention). For example, the request may be addressed to the sender and/or to an apparatus of the sender used for sending the message (e.g. the apparatus according to the first aspect of the invention). For example, the request may comprise an address associated with the sender (e.g. a sender identifier and/or a sender address such as an email address) and/or an address associated with an apparatus of the sender used for sending the message (e.g. a device identifier and/or a device address such as an IP address and/or a phone number) as a recipient information item. For example, the request may be sent by the apparatus according to the second aspect of the invention. The request may for example be sent by communication means of the apparatus according to the second aspect of the invention, for example a communication interface such as a network interface.

Triggering sending the request to the sender may for example be understood to mean that sending the request to the sender is controlled by the apparatus performing the method according to the second aspect of the invention (e.g. the apparatus according to the second aspect of the invention). For example, the apparatus performing the method according to the second aspect of the invention (e.g. the apparatus according to the second aspect of the invention) may trigger (e.g. control) external communication means (e.g. communication means external to the apparatus according to the second aspect of the invention) to send the request.

Sending the request may be understood to mean that a signal (e.g. a communication signal) comprising the request is sent. Receiving the request may accordingly be understood to mean that a signal (e.g. a communication signal) comprising the request is received and that the request is extracted from the received signal.

For example, the request is received by the apparatus according to the first aspect of the invention. For example, the request is received by communication means of the apparatus according to the first aspect of the invention for example a communication interface such as a network interface.

The request may be sent and/or received via a communication link, for example a network link such as an internet link, a virtual private network link and/or a cellular network link.

Sending or triggering sending the second decryption key (e.g. the second decryption key associated with the at least one recipient) to the at least one recipient in response to the request may be performed similar to sending or triggering sending the message containing the encrypted payload information item and the encrypted first decryption key to the at least one recipient as disclosed above. For example, a message containing the second decryption key (e.g. the second decryption key associated with the at least one recipient) may be sent or triggered to be sent to the at least one recipient. Accordingly, receiving the requested one of the first decryption key and the second decryption key may be performed similar to receiving the message containing the encrypted payload information item and the encrypted first decryption key as disclosed above. For example, a message containing the second decryption key may be received.

In certain embodiments of the invention, the second decryption key may be sent in encrypted form to the at least one recipient and received in encrypted form by the at least one recipient. For example, the second decryption key may be encrypted by use of a public key of an asymmetric key pair of the at least one recipient. The public key of the asymmetric key pair of the at least one recipient may be retrievable and/or retrieved from a public key server. The private key of the asymmetric key pair of the at least one recipient may be only known to the at least one recipient.

For example, the method according to the first aspect of the invention may comprise:
- determining whether the at least one recipient is allowed to access the encrypted payload information item, wherein the second decryption key is only sent or triggered to be sent to the at least one recipient in response to the request, if it is determined that the at least one recipient is allowed to access the encrypted payload information item.

For example, determining whether the at least one recipient is allowed to access the payload information item is at least partially based on an authentication information item contained in the request for authenticating the at least one recipient, an identification information item contained in the request for identifying the at least one recipient, a validity time of the payload information item, a validity time of the first decryption key and/or the second decryption key, a geographical validity of the first decryption key and/or the second decryption key or a combination thereof. Accordingly, the request may contain an identification information item for identifying the at least one recipient and/or an authentication information item for authenticating the at least one recipient.

The determining whether the at least one recipient is allowed to access the payload information item is for example based on access rules for the encrypted payload information item. For example, such access rules may define which recipient(s) are allowed to access the encrypted payload information items of the plurality of encrypted payload information. Alternatively or additionally, such access rules may define a validity time and/or a geographical validity for the encrypted payload information item. For example, the validity time may indicate a date and time when the encrypted payload information item expires, wherein access to the encrypted payload information item is not allowed if it is expired. The geographical validity may restrict the location where access to the encrypted payload information item is allowed (e.g. only online, only offline, only at a certain geolocation, etc.). An example of access rules is an access rule matrix, for example an access rule matrix defining a validity time and/or a geographical validity for the encrypted payload information item and which recipient(s) are allowed to access the encrypted payload information item.

This exemplary embodiment of the invention may have the effect that access to the encrypted payload information item is controlled by requiring the at least one recipient to request the sender for the second decryption key if the at least one recipient desires to access the encrypted payload information item. Accordingly, changes in access rules after sending the message containing the encrypted payload information item and the encrypted first decryption key may be also enforced by this exemplary embodiment.

According to an exemplary embodiment of the invention, the containing the encrypted payload information item and the encrypted first decryption key further contains at least one of:
- a signature information item,
- a recipient information item,
- a key information item,
- an encryption information item, and
- a message policy information item.

A signature information item may for example represent a digital signature of the message such as signature according to the RSASSA-PSS signature algorithm as specified in PKCS#1. Such a digital signature may allow to verify whether the message was created by a known sender, that the sender cannot deny having sent the message and/or that the message was not altered in transit.

A sender information item and a recipient information item may for example represent an address associated with the sender and an address associated with the recipient (e.g. a recipient identifier and/or a recipient address such as an email address) and/or an address associated with an apparatus of the sender and an address associated with an apparatus of the recipient (e.g. a device identifier and/or a device address such as an IP address and/or a phone number). This may allow routing the message from the sender and/or an apparatus of the sender to the recipient and/or an apparatus of the recipient.

An encryption information item may for example identify the cryptography algorithm(s) used for encrypting the encrypted payload information item.

A message policy information item may for example define policy rules for accessing and/or processing the message and/or the encrypted payload information item. For example, the message policy information item defines a date and time when the message expires and/or restricts the location where the message may be opened (e.g. only online, only offline, only at a certain geolocation, etc.) and/or requires additional user identification before the message and/or the encrypted payload information item may be accessed (e.g. by requiring input of a password).

Other features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE FIGURES

- Fig. 1: is a block diagram of an exemplary embodiment of an apparatus according to the first aspect of the invention;
- Fig. 2: is a block diagram of an exemplary embodiment of an apparatus according to the second aspect of the invention;
- Fig. 3: is a block diagram of an exemplary embodiment of a system according to the third aspect of the invention;
- Fig. 4: is a flowchart of an exemplary embodiment of a method according to the first aspect of the invention;
- Fig. 5a-b: are flowcharts of an exemplary embodiment of a method according to the second aspect of the invention;
- Fig. 6a-d: are exemplary embodiments of an access rule matrix, an encrypted payload information item, an encrypted first decryption key and a message containing an encrypted payload information item and an encrypted first decryption key according to the invention; and
- Fig. 7: is a schematic illustration of examples of tangible and non-transitory storage media according to the invention.

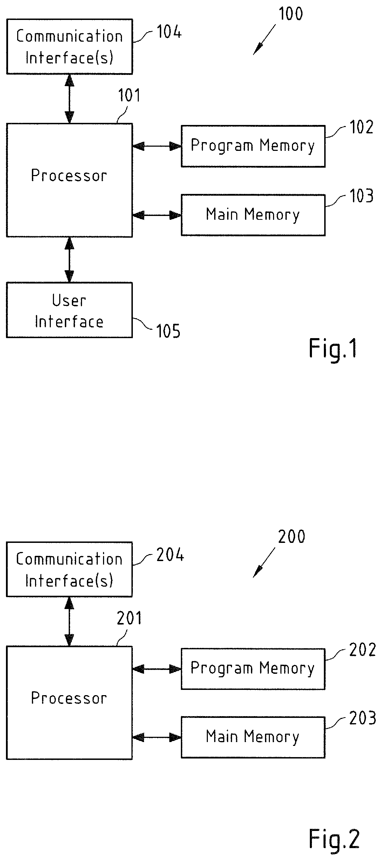

Fig. 1 is a block diagram of an exemplary embodiment of an apparatus according to the first aspect of the invention. In the following, it is assumed that the apparatus is a sender device 100.

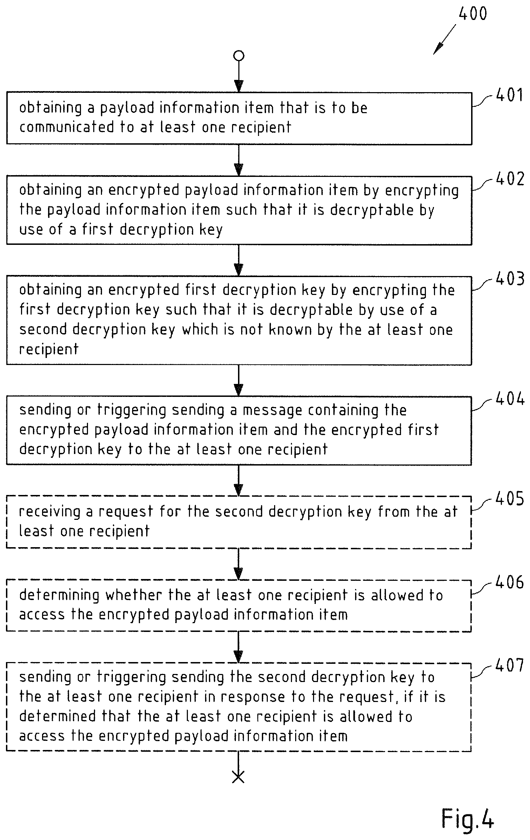

Sender device 100 comprises a processor 101. Processor 101 may represent a single processor or two or more processors, which are for example at least partially coupled, for example via a bus. Processor 101 executes a program code stored in program memory 102 (for example program code causing sender device 100 to perform one or more of the embodiments of a method (or parts thereof) according to the first aspect of the invention (as for example further described below with reference to Fig. 4), when executed on processor 101), and interfaces with a main memory 103.

Some or all of memories 102 and 103 may also be included into processor 101. One of or both of memories 102 and 103 may be fixedly connected to processor 101 or at least partially removable from processor 101, for example in the form of a memory card or stick.

Program memory 102 may for example be a non-volatile memory. It may for example be a FLASH memory (or a part thereof), any of a ROM, PROM, EPROM, MRAM or a FeRAM (or a part thereof) or a hard disc (or a part thereof), to name but a few examples. Program memory 102 may also comprise an operating system for processor 101. Program memory 102 may for example comprise a first memory portion that is fixedly installed in sender device 100, and a second memory portion that is removable from sender device 100, for example in the form of a removable SD memory card.

Main memory 103 may for example be a volatile memory. It may for example be a DRAM memory, to give a non-limiting example. It may for example be used as a working memory for processor 101 when executing an operating system and/or programs.

Processor 101 further controls a communication interface 104 configured to send and/or receive information such as messages via a communication link. For example, the communication interface 104 is configured to send and/or receive information in a signal or as part of a signal (e.g. a communication signal) via a communication link. An example of a communication interface is a network interface such as a network card.

Furthermore, processor 101 may further control an optional user interface 105 configured to present information to a user of sender device 100 and/or to receive information from such a user (e.g. by capturing user input). User interface 105 may for instance be the standard user interface via which a user of sender device 100 controls other functionality thereof, such as browsing the internet, etc. Examples of such a user interface are a touch-sensitive display, a keyboard, a touchpad, a display, etc.

The components 102-105 of sender device 100 may for example be connected with processor 101 by means of one or more serial and/or parallel busses.

It is to be understood that sender device 100 may comprise various other components.

Fig. 2 is a block diagram of an exemplary embodiment of an apparatus according to the second aspect of the invention. In the following, it is assumed that the apparatus is a recipient device 200.

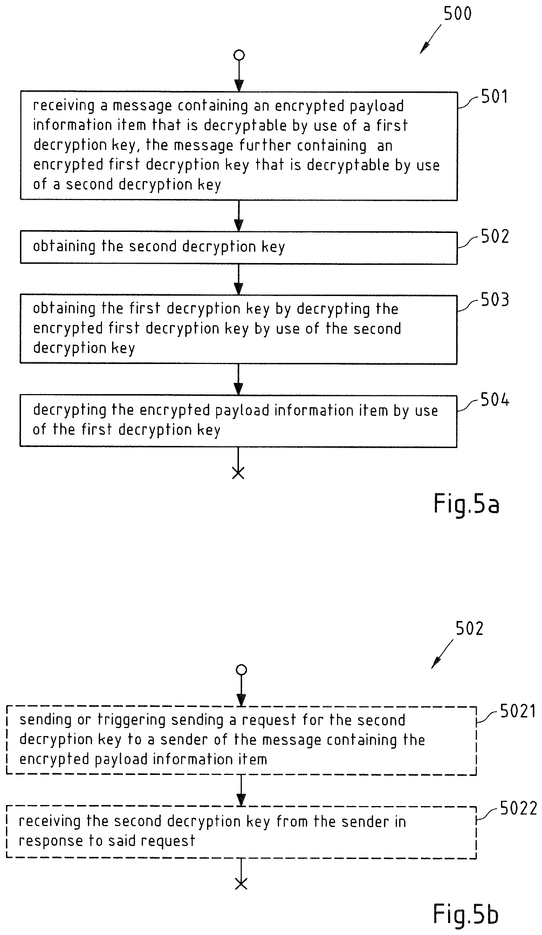

Recipient device 200 comprises a processor 201. Processor 201 may represent a single processor or two or more processors, which are for example at least partially coupled, for example via a bus. Processor 201 executes a program code stored in program memory 202 (for example program code causing recipient device 200 to perform one or more of the embodiments of a method (or parts thereof) according to the second aspect of the invention (as for example further described below with reference to Fig. 5), when executed on processor 201), and interfaces with a main memory 203.

Some or all of memories 202 and 203 may also be included into processor 201. One of or both of memories 202 and 203 may be fixedly connected to processor 201 or at least partially removable from processor 201, for example in the form of a memory card or stick. Program memory 202 may for example be a non-volatile memory. It may for example be a FLASH memory (or a part thereof), any of a ROM, PROM, EPROM, MRAM or a FeRAM (or a part thereof) or a hard disc (or a part thereof), to name but a few examples.

Program memory 202 may also comprise an operating system for processor 201. Program memory 202 may for example comprise a first memory portion that is fixedly installed in recipient device 200 , and a second memory portion that is removable from recipient device 200, for example in the form of a removable SD memory card.

Main memory 203 may for example be a volatile memory. It may for example be a DRAM memory, to give non-limiting example. It may for example be used as a working memory for processor 201 when executing an operating system and/or programs.

Processor 201 further controls a communication interface 204 configured to send and/or receive information such as messages via a communication link. For example, the communication interface 204 is configured to send and/or receive information in a signal or as part of a signal (e.g. a communication signal) via a communication link. An example of a communication interface is a network interface such as a network card.

The components 202-204 of recipient device 200 may for example be connected with processor 201 by means of one or more serial and/or parallel busses.

It is to be understood that recipient device 200 may comprise various other components such as a user interface (e.g. a touch-sensitive display, a keyboard, a touchpad, a display, etc.).

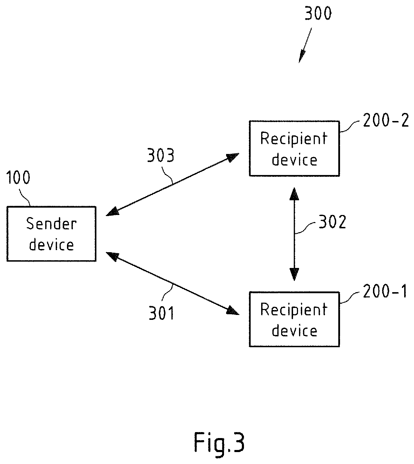

Fig. 3 is a block diagram of an exemplary embodiment of a system 300 according to the third aspect of the invention.

System 300 comprises a sender device 100 and recipient devices 200-1 and 200-2. Sender device 100 corresponds to the sender device 100 of Fig. 1 as disclosed above; and each of recipient devices 200-1 and 200-2 corresponds to recipient device 200 of Fig. 2 as disclosed above.

Sender device 100 and recipient devices 200-1 and 200-2 may communicate with each other via communication links 301, 302 and 303 respectively.

System 300 may optionally comprise further entities such as a key server device (e.g. a public key server device) and/or further sender devices and/or further recipient devices.

Fig. 4 is a flow chart 400 illustrating an exemplary embodiment of a method according to the first aspect of the invention. The actions of flow chart 400 may be performed by sender device 100, for example. In the following, it is assumed that processor 101 and the program code stored in memory 102 of sender device 100 may cause the sender device 100 to perform all or some of actions 401 to 407 when program code is retrieved from program memory 102 and executed by processor 101. Furthermore, it is assumed that sender device 100 is part of system 300 described above with respect to Fig. 3.

Sender device 100 obtains a payload information item that is to be communicated to at least one recipient (action 401). For example, the payload information item may be received by communication interface 104 and/or captured as user input by optional user interface 105 in action 401. Alternatively or additionally, the payload information item may be at least partially determined in step 401 (e.g. by processor 101).

The payload information item may represent information that is to be communicated from a sender to at least one recipient. A sender may be understood to mean a person (e.g. a user) and/or an organization (e.g. a company such as a service provider company) or another entity (e.g. a device or a computer program or application) which triggers (e.g. initiates or controls) communication of the payload information item by sender device 100, and a recipient may be understood to mean a person (e.g. a user) and/or an organization (e.g. a company such as a service provider company) or another entity (e.g. a device or a computer program or application) to which the payload information item is to be communicated. For example, the payload information item may represent information necessary to perform one or more business processes such as a payment process or a booking process.

In the following, it is assumed that the payload information item represents information that is to be communicated from a sender using sender device 100 to at least one recipient using recipient device 200-1.

Sender device 100 obtains an encrypted payload information item by encrypting the payload information item such that it is decryptable by use of a first decryption key (action 402).

Encrypting the payload information item such that it is decryptable by a first decryption key may mean that for decrypting the encrypted payload information item the first decryption key must be used.

Without limiting the scope of the invention, it is assumed in the following that the encrypted payload information item is obtained by encrypting the payload information item by use of a symmetric cryptography algorithm. Accordingly, the first decryption key may be a symmetric key which is used for encrypting (e.g. encrypting in action 402) and decrypting (e.g. decrypting in action 504 as disclosed below). This may have the effect that access to the encrypted payload information item is restricted to recipients having access to this symmetric key (i.e. the first decryption key).

Using a symmetric cryptography algorithm allows to reduce the processing time and/or capacity for encrypting and/or decrypting compared to an asymmetric cryptography algorithm. As disclosed above, exemplary symmetric cryptography algorithms are the AES-Algorithm and the 3DEA-Algorithm.

The first decryption key may be at least partially generated in action 402 based on a random number generator or a pseudo random number generator such that it is avoided that the first decryption key is known by the at least one recipient. Alternatively, the first decryption may for example have been generated based on a random number generator or a pseudo random number generator previously and stored in program memory 102.

As a result of the encrypting in action 402, the encrypted payload information item is obtained.

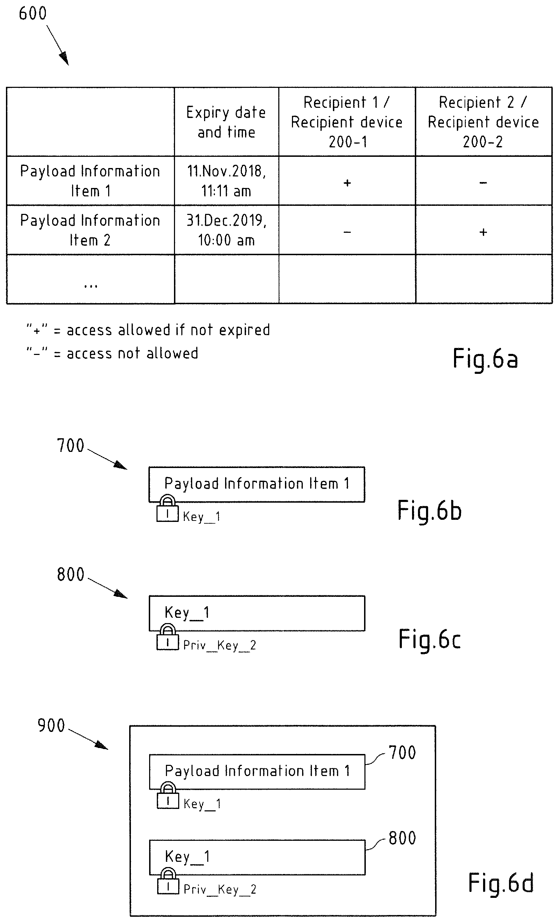

An exemplary embodiment of such an encrypted payload information item 700 is shown in Fig. 6b. As indicated in Fig. 6b, encrypted payload information item 700 is decryptable by Key_1 and contains payload information item 1 in encrypted form.

Sender device 100 obtains an encrypted first decryption key by encrypting the first decryption key such that it is decryptable by use of a second decryption key which is not known by the at least one recipient (action 403).

Encrypting the first decryption key such that it is decryptable by a second decryption key may mean that for decrypting the encrypted first decryption key the second decryption key must be used.

Without limiting the scope of the invention, it is assumed in the following that the encrypted first decryption key is obtained by encrypting the first decryption key by use of an asymmetric cryptography algorithm. For example, the second decryption key may be a private key of an asymmetric key pair. The public key of this asymmetric key pair may be used for encrypting the first decryption key in action 403 such that that it is decryptable by use of the private key of this asymmetric key pair (i.e. the second decryption key).This may have the effect that access to the encrypted payload information item is restricted to recipients being associated with the private key of this asymmetric key pair (i.e. the second decryption key).

The second decryption key may be at least partially generated based on a random number generator or a pseudo random number generator such that it is avoided that the second decryption key is known by the at least one recipient.

As a result of the encrypting in action 403, the encrypted first decryption key is obtained.

An exemplary embodiment of such an encrypted first decryption key 800 is shown in Fig. 6c. As indicated in Fig. 6c, encrypted first decryption key 800 is decryptable by Priv_Key_2 and contains Key_1 in encrypted form. As disclosed above, Key_1 may be used to decrypt the encrypted payload information item 700.

Priv_Key_2 is a private key of an asymmetric key pair which is to be used by the at least one recipient using recipient device 200-1. Furthermore, Key_1 is a symmetric key. For example, Key_1 may be generated by sender device 100 for decrypting and encrypting payload information item 1; and Priv_Key_2 may be generated by sender device 100 to be used for decrypting the encrypted first decryption key 800. For example, Priv_Key_2 may be generated by sender device 100 to be used by the at least one recipient or a plurality of recipients including the at least one recipient for decrypting the encrypted first decryption key 800. This may have the effect that access to the encrypted payload information 700 item may be controlled by the sender or sender device 100 by controlling access to Priv_Key_2 (i.e. the second decryption key) which allows decrypting the encrypted first decryption key 800. A recipient which is allowed to access Priv_Key_2 (i.e. the second decryption key) for decrypting the encrypted first decryption key 800 may be understood to be associated with Priv_Key_2 (i.e. the second decryption key).

To avoid that Key_1 and Priv_Key_2 are known to the at least one recipient, Key_1 and Priv_Key_2 may be generated or may have been generated at least partially based on a random number generator or a pseudo random number generator. Alternatively or additionally, Key_1 and/or Priv_Key_2 may be stored in program memory 102 and kept secret before action 404.

Sender device 100 sends or triggers sending a message containing the encrypted payload information item and the encrypted first decryption key to the at least one recipient (action 404). Sending the message to at least one recipient may be understood to mean that the message is sent such that it is receivable by the recipient device 200-1. For example, the message is sent by sender device 100 via communication link 301 to recipient device 200-1.

Furthermore, the message may be sent by sender device 100 to one or more further recipients (e.g. to recipient device 200-2).

An exemplary embodiment of a message 900 containing the encrypted payload information item 700 and the encrypted first decryption key 800 is shown in Fig. 6d.

Optionally, sender device 100 may receive a request for the second decryption key from the at least one recipient (action 405). For example, the request may be understood to be received from the at least one recipient if it is received from a device used by the recipient and/or if it contains an identification information item identifying the recipient. For example, the request is received from recipient device 200-1 in action 405.

In response to the request, sender device 100 determines whether the recipient is allowed to access the encrypted payload information item (action 406).

As disclosed above, determining whether the recipient is allowed to access the encrypted payload information item may be at least partially based on an authentication information item contained in the request for authenticating the recipient, an identification information item contained in the request for identifying the recipient, a validity time of the payload information item, a validity time of the requested one of the first decryption key and the second decryption key, a geographical validity of the one of the first decryption key and the second decryption key or a combination thereof.

The determining is for example based on access rules for one or more encrypted payload information items. For example, such access rules define which recipient(s) are allowed to access which encrypted payload information. Alternatively or additionally, such access rules may define a validity time and/or a geographical validity for the encrypted payload information item. For example, the validity time may indicate a date and time when the encrypted payload information item expires, wherein access to the encrypted payload information item is not allowed if it is expired. The geographical validity may restrict the location where access to the encrypted payload information item is allowed (e.g. only online, only offline, only at a certain geolocation, etc.). The access rules may be received and/or hold available by the sender device 100. For example, the access rules may be at least partially received by communication means 104 and/or by capturing user input by optional user interface 105. Alternatively or additionally, the access rules may be at least partially stored in program memory 102.

An example of access rules is an access rule matrix. An exemplary embodiment of such an access rule matrix 600 for a recipient using recipient device 200-1 and a recipient using recipient device 200-2 is shown in Fig. 6a. As indicated in access rule matrix 600, the first recipient is allowed to have access to payload information item 1 if it is not expired, and the second recipient is allowed to have access to payload information item 2 if it is not expired. Therein, payload information item 1 expires on 11. November 2018 at 11:11 am, and payload information item 2 expires on 31. December 2019 at 10:00 am.

For example, the request received in action 404 may be a request for Priv_Key_2 and may contain an identification information item identifying the recipient using recipient device 200-1. As disclosed above, Priv_Key_2 may be used for decrypting encrypted first decryption key 800 which contains Key_1 in encrypted form. The recipient using recipient device 200-1 may only be allowed to access Priv_Key_2, if the recipient using recipient device 200-1 is allowed to access the encrypted payload information item 700.

If the request is received before 11. November 2018, 11:11 am, it may be determined based on access rule matrix 600 in action 406 that the at least one recipient using recipient device 200-1 (i.e. the recipient identified by the identification information item contained in the request) is allowed to access the encrypted payload information item 700 which contains payload information item 1 in encrypted form. Otherwise, it may be determined based on access rule matrix 600 in action 406 that the recipient using recipient device 200-1 is not allowed to access the encrypted payload information item 700 which contains payload information item 1 in encrypted form.

If it is determined in action 406 that the recipient is allowed to access the encrypted payload information item, the sender device 100 sends or triggers sending the second decryption key (e.g. Priv_Key_2 as disclosed above)to the recipient (action 407).

Otherwise, the flowchart 400 may be terminated.

Sending the second decryption key to the recipient may be understood to mean that the second decryption key (e.g. Priv_Key_2 as disclosed above) is sent such that it is receivable by the recipient device 200-1. For example, the second decryption key (e.g. Priv_Key_2 as disclosed above) is sent by sender device 100 via communication link 301 to recipient device 200-1. For example, a message containing the second decryption key may be sent in action 407 to the at least one recipient.

The second decryption key may be sent in encrypted form to the at least one recipient in action 406. For example, the second decryption key may be encrypted by use of a public key of the at least one recipient. The public key of the at least one recipient may be retrieved from a public key server (e.g. a public key server of system 300).

Fig. 5a is a flow chart 500 illustrating an exemplary embodiment of a method according to the second aspect of the invention. The actions of flow chart 500 may be performed by recipient device 200-1 of system 300 described above with respect to Fig. 3, for example. In the following, it is assumed that processor 201 and the program code stored in memory 202 of recipient device 200-1 may cause the recipient device 200-1 to perform all or some of actions 501 to 504 when program code is retrieved from program memory 202 and executed by processor 201.

The recipient device 200-1 receives a message containing an encrypted payload information item that is decryptable by use of a first decryption key, the message further containing an encrypted first decryption key that is decryptable by use of a second decryption key (action 501). For example, the message is received by recipient device 200-1 via communication link 301 from sender device 100.

Without limiting the scope of the invention, it is assumed in the following that the message received in action 501 corresponds to the message sent in action 404 of flowchart 400 as disclosed above. For example, message 900 containing encrypted payload information 700 and encrypted first decryption key 800 as shown in Fig. 6d is received in action 501.

As disclosed above, a recipient may be understood to mean a person (e.g. a user) and/or an organization (e.g. a company such as a service provider company) to which the message is sent and/or which receives the message. By receiving the message by the recipient device 200-1 the message may thus be understood to be received by the recipient using recipient device 200-1.

The recipient device 200-1 obtains the second decryption key (action 502).

Obtaining the second decryption key may mean that the second decryption key is received by communication interface 204 of recipient device 200-1. For example, obtaining the second decryption key may comprise actions 5021 and 5022 as shown in Fig. 5b.

In action 5021, recipient device 200-1 sends or triggers sending a request for the second decryption key to a sender of the message containing the encrypted payload information item. Sending the request to the sender of the message containing the encrypted payload information item may be understood to mean that the request is sent such that it is receivable by the sender or a sender device used by the sender for sending the message. For example, the request is sent by recipient device 200-1 via communication link 301 to sender device 100.

Without limiting the scope of the invention, it is assumed in the following that the request sent in action 5021 corresponds to the request received in action 405 of flowchart 400. As disclosed above, the request may be a request for Priv_Key_2 and may contain an identification information item identifying the recipient using recipient device 200-1.

Subsequently, the recipient device 200-1 receives the second decryption key in response to the request (action 5022). Without limiting the scope of the invention, it is assumed in the following that the second decryption key received in action 5022 corresponds to the second decryption key sent by sender device 100 in action 407 of flowchart 400 as disclosed above. For example, Priv_Key_2 may be received from sender device 100 in action 5022.

The recipient device 200-1 obtains the first decryption key by decrypting the encrypted first decryption key by use of the second decryption key (action 503).

Decrypting the encrypted first decryption key by use of the second decryption key may mean that the second decryption key is used for decrypting the encrypted first decryption key in action 503. As a result of decrypting the encrypted first decryption key, the first decryption key item may be obtained in unencrypted form.

The decrypting in action 503 may correspond to (e.g. reverse) the encrypting in action 403 as disclosed above. Accordingly, an asymmetric cryptography algorithm may be used in action 503 for decrypting the encrypted first decryption key.

For example, encrypted first decryption key 800 may be decrypted by use of Priv_Key_2 and an asymmetric cryptography algorithm in action 503.

The recipient device 200-1 decrypts the encrypted payload information item by use of the first decryption key (action 504).

Decrypting the encrypted payload information item by use of the first decryption key may mean that the first decryption key is used for decrypting the encrypted payload information item in action 504. As a result of decrypting the encrypted payload information, the payload information item may be obtained in unencrypted form.

The decrypting in action 504 may correspond to (e.g. reverse) the encrypting in action 402 as disclosed above. Accordingly, a symmetric cryptography algorithm may be used in action 504 for decrypting the encrypted payload information item.

For example, the payload information item 1 is obtained by decrypting encrypted payload information item 700 in action 504.

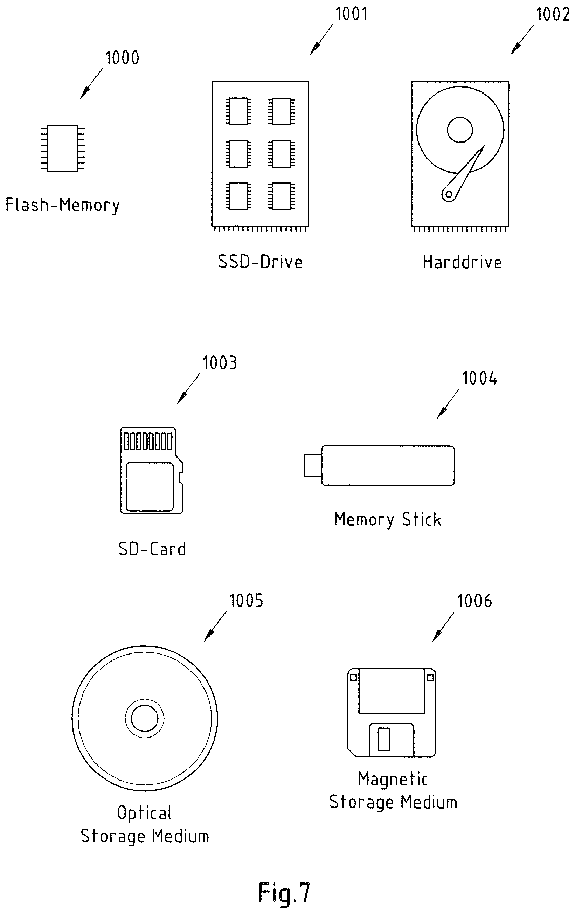

Fig. 7 is a schematic illustration of examples of tangible and non-transitory computer-readable storage media according to the present invention that may for instance be used to implement program memories 102 and 202 of Figs. 1 and 2. To this end, Fig. 7 displays a flash memory 1000, which may for instance be soldered or bonded to a printed circuit board, a solid-state drive 1001 comprising a plurality of memory chips (e.g. Flash memory chips), a magnetic hard drive 102, a Secure Digital (SD) card 1003, a Universal Serial Bus (USB) memory stick 1004, an optical storage medium 1005 (such as for instance a CD-ROM or DVD) and a magnetic storage medium 1006.

Any presented connection in the described embodiments is to be understood in a way that the involved components are operationally coupled. Thus, the connections can be direct or indirect with any number or combination of intervening elements, and there may be merely a functional relationship between the components.

Any of the processors mentioned in this text, in particular but not limited to processors 101 and 201 of Figs. 1 and 2, could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

It will be understood that all presented embodiments are only exemplary, and that any feature presented for a particular exemplary embodiment may be used with any aspect of the invention on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

## Claims

1. A method performed by an apparatus (100), said method comprising:
- obtaining (401) a payload information item that is to be communicated to at least one recipient,
- obtaining (402)an encrypted payload information item (700) by encrypting said payload information item such that it is decryptable by use of a first decryption key,
- obtaining (403)an encrypted first decryption key (800) by encrypting said first decryption key such that it is decryptable by use of a second decryption key which is not known by said at least one recipient,
- sending or triggering sending (404) a message (900) containing said encrypted payload information item (700) and said encrypted first decryption key (800) to said at least one recipient,
- receiving (405) a request for said second decryption key from said at least one recipient,
- determining (406) whether said at least one recipient is allowed to access said encrypted payload information item,
- sending or triggering sending (407) said second decryption key to said at least one recipient in response to said request, wherein said second decryption key is only sent or triggered to be sent to said at least one recipient in response to said request, if it is determined that said at least one recipient is allowed to access said encrypted payload information item

2. The method according to claim 1, wherein said encrypted payload information item (700) and/or said encrypted first decryption key (800) are decryptable by use of at least one asymmetric cryptography algorithm, at least one symmetric cryptography algorithm or a combination thereof.

3. The method according to any of claims 1 and 2, said method further comprising:
- generating or triggering generating said first decryption key and/or said second decryption key.

4. The method according to any of claims 1 to 3, wherein said first decryption key and/or said second decryption key are generated at least partially based on a random number generator or a pseudo random number generator such that said first decryption key and/or said second decryption key are not known by said at least one recipient.

5. The method according to any of claims 1 to 4, wherein said first decryption key and/or said second decryption key are only to be used by the at least one recipient.

6. The method according to any of claims 1 to 4, wherein said first decryption key and/or said second decryption key are to be used by a plurality of recipients, wherein said at least one recipient is one of the plurality of recipients, and wherein said payload information item is to be communicated to said plurality of recipients.

7. The method according to any of claims 1 to 6, wherein said determining whether said at least one recipient is allowed to access said payload information item is at least partially based on an authentication information item contained in said request for authenticating said at least one recipient, an identification information item contained in said request for identifying said at least one recipient, a validity time of said payload information item, a validity time of said first decryption key and/or said second decryption key, a geographical validity of said first decryption key and/or said second decryption key or a combination thereof.

8. The method according to any of claims 1 to 7, wherein said message (900) containing said encrypted payload information item further contains at least one of:
- a signature information item,
- a recipient information item,
- a key information item,
- an encryption information item, and
- a message policy information item.

9. An apparatus, said apparatus comprising means(101-105, 201-204) for performing the method according to any of claims 1 to 8.

10. A computer program code, said computer program code when executed by a processor causing an apparatus to perform the actions of the method according to any of claims 1 to 8.

11. A system, said system comprising:
- at least one apparatus (100) comprising means for performing the method according to any of claims 1 to 8, and
- at least one further apparatus (200-1, 200-2) comprising means for performing a method comprising:
- receiving (501) a message (900) containing an encrypted payload information item (700) that is decryptable by use of a first decryption key, said message (900) further containing an encrypted first decryption key (800) that is decryptable by use of a second decryption key, wherein access to said second decryption key is controlled by a sender of said message,
- obtaining (502) said second decryption key,
- obtaining (503) said first decryption key by decrypting said encrypted first decryption key by use of said second decryption key, and
- decrypting (504) said encrypted payload information item (700) by use of said first decryption key.

12. The system according to claim 11, wherein said second decryption key is obtained by:
- sending or triggering sending (5021) a request for said second decryption key to a sender of said message (900) containing said encrypted payload information item, and
- receiving (5022) said second decryption key from said sender in response to said request.

## Patentansprüche

1. Ein Verfahren, durchgeführt von einer Vorrichtung (100), wobei das Verfahren umfasst:
- Erhalten (401) eines Nutzlast-Informationselements, das an mindestens einen Empfänger zu übermitteln ist,
- Erhalten (402) eines verschlüsselten Nutzlast-Informationselements (700) durch Verschlüsseln des Nutzlast-Informationselements, sodass es mittels eines ersten Entschlüsselungsschlüssels entschlüsselbar ist,
- Erhalten (403) eines verschlüsselten ersten Entschlüsselungsschlüssels (800) durch Verschlüsseln des ersten Entschlüsselungsschlüssels, sodass er mittels eines zweiten Entschlüsselungsschlüssels entschlüsselbar ist, der dem mindestens einen Empfänger nicht bekannt ist,
- Senden oder Veranlassen des Sendens (404) einer Nachricht (900), die das verschlüsselte Nutzlast-Informationselement (700) und den verschlüsselten ersten Entschlüsselungsschlüssel (800) enthält, an den mindestens einen Empfänger,
- Empfangen (405) einer Anforderung für den zweiten Entschlüsselungsschlüssel von dem mindestens einen Empfänger,
- Bestimmen (406), ob der mindestens eine Empfänger berechtigt ist, auf das verschlüsselte Nutzlast-Informationselement zuzugreifen,
- Senden oder Veranlassen des Sendens (407) des zweiten Entschlüsselungsschlüssels an den mindestens einen Empfänger in Antwort auf die Anforderung, wobei der zweite Entschlüsselungsschlüssel nur dann an den mindestens einen Empfänger gesendet oder zu senden veranlasst wird in Antwort auf die Anforderung, wenn festgestellt wird, dass der mindestens eine Empfänger berechtigt ist, auf das verschlüsselte Nutzlast-Informationselement zuzugreifen.

2. Das Verfahren nach Anspruch 1, wobei das verschlüsselte Nutzlast-Informationselement (700) und/oder der verschlüsselte erste Entschlüsselungsschlüssel (800) mittels mindestens eines asymmetrischen Kryptographiealgorithmus, mindestens eines symmetrischen Kryptographiealgorithmus oder einer Kombination davon entschlüsselbar sind.

3. Das Verfahren nach einem der Ansprüche 1 und 2, wobei das Verfahren ferner umfasst:
- Erzeugen oder Veranlassen des Erzeugens des ersten Entschlüsselungsschlüssels und/oder des zweiten Entschlüsselungsschlüssels.

4. Das Verfahren nach einem der Ansprüche 1 bis 3, wobei der erste Entschlüsselungsschlüssel und/oder der zweite Entschlüsselungsschlüssel zumindest teilweise basierend auf einem Zufallszahlengenerator oder einem Pseudo-Zufallszahlengenerator erzeugt werden, sodass der erste Entschlüsselungsschlüssel und/oder der zweite Entschlüsselungsschlüssel dem mindestens einen Empfänger nicht bekannt sind.

5. Das Verfahren nach einem der Ansprüche 1 bis 4, wobei der erste Entschlüsselungsschlüssel und/oder der zweite Entschlüsselungsschlüssel nur von dem mindestens einen Empfänger zu verwenden sind.

6. Das Verfahren nach einem der Ansprüche 1 bis 4, wobei der erste Entschlüsselungsschlüssel und/oder der zweite Entschlüsselungsschlüssel von einer Vielzahl von Empfängern zu verwenden sind, wobei der mindestens eine Empfänger einer der Vielzahl von Empfängern ist, und wobei das Nutzlast-Informationselement an die Vielzahl von Empfängern zu übermitteln ist.

7. Das Verfahren nach einem der Ansprüche 1 bis 6, wobei das Bestimmen, ob der mindestens eine Empfänger berechtigt ist, auf das Nutzlast-Informationselement zuzugreifen, zumindest teilweise auf einem Authentifizierungs-Informationselement, das in der Anforderung zur Authentifizierung des mindestens einen Empfängers enthalten ist, einem Identifizierungs-Informationselement, das in der Anforderung zur Identifizierung des mindestens einen Empfängers enthalten ist, einer Gültigkeitsdauer des Nutzlast-Informationselements, einer Gültigkeitsdauer des ersten Entschlüsselungsschlüssels und/oder des zweiten Entschlüsselungsschlüssels, einer geografischen Gültigkeit des ersten Entschlüsselungsschlüssels und/oder des zweiten Entschlüsselungsschlüssels oder einer Kombination davon basiert.

8. Das Verfahren nach einem der Ansprüche 1 bis 7, wobei die Nachricht (900), die das verschlüsselte Nutzlast-Informationselement enthält, ferner mindestens eines der Folgenden enthält:
- ein Signatur-Informationselement,
- ein Empfänger-Informationselement,
- ein Schlüssel-Informationselement,
- ein Verschlüsselungs-Informationselement und
- ein Nachrichtenrichtlinien-Informationselement.

9. Eine Vorrichtung, wobei die Vorrichtung Mittel (101-105, 201-204) zur Durchführung des Verfahrens nach einem der Ansprüche 1 bis 8 umfasst.

10. Ein Computerprogrammcode, wobei der Computerprogrammcode, wenn er von einem Prozessor ausgeführt wird, eine Vorrichtung veranlasst, die Aktionen des Verfahrens nach einem der Ansprüche 1 bis 8 durchzuführen.

11. Ein System, wobei das System umfasst:
- mindestens eine Vorrichtung (100) umfassend Mittel zur Durchführung des Verfahrens nach einem der Ansprüche 1 bis 8, und
- mindestens eine weitere Vorrichtung (200-1, 200-2) umfassend Mittel zur Durchführung eines Verfahrens, das umfasst:
- Empfangen (501) einer Nachricht (900), die ein verschlüsseltes Nutzlast-Informationselement (700) enthält, das mittels eines ersten Entschlüsselungsschlüssels entschlüsselbar ist, wobei die Nachricht (900) ferner einen verschlüsselten ersten Entschlüsselungsschlüssel (800) enthält, der mittels eines zweiten Entschlüsselungsschlüssels entschlüsselbar ist, wobei der Zugriff auf den zweiten Entschlüsselungsschlüssel von einem Absender der Nachricht kontrolliert wird,
- Erhalten (502) des zweiten Entschlüsselungsschlüssels,
- Erhalten (503) des ersten Entschlüsselungsschlüssels durch Entschlüsseln des verschlüsselten ersten Entschlüsselungsschlüssels mittels des zweiten Entschlüsselungsschlüssels und
- Entschlüsseln (504) des verschlüsselten Nutzlast-Informationselements (700) mittels des ersten Entschlüsselungsschlüssels.

12. Das System nach Anspruch 11, wobei der zweite Entschlüsselungsschlüssel erhalten wird durch:
- Senden oder Veranlassen des Sendens (5021) einer Anforderung für den zweiten Entschlüsselungsschlüssel an einen Absender der Nachricht (900), die das verschlüsselte Nutzlast-Informationselement enthält, und
- Empfangen (5022) des zweiten Entschlüsselungsschlüssels von dem Absender in Antwort auf die Anforderung.

## Revendications

1. Une méthode exécutée par un dispositif (100), ladite méthode comprenant:
- obtenir (401) un élément d'information de charge utile à communiquer à au moins un destinataire,
- obtenir (402) un élément d'information de charge utile chiffré (700) en chiffrant ledit élément d'information de charge utile de sorte qu'il est déchiffrable au moyen d'une première clé de déchiffrement,
- obtenir (403) une première clé de déchiffrement chiffrée (800) en chiffrant ladite première clé de déchiffrement de sorte qu'elle est déchiffrable au moyen d'une deuxième clé de déchiffrement qui n'est pas connue dudit au moins un destinataire,
- envoyer ou déclencher envoyer (404) un message (900) contenant ledit élément d'information de charge utile chiffré (700) et ladite première clé de déchiffrement chiffrée (800) audit au moins un destinataire,
- recevoir (405) une demande de ladite deuxième clé de déchiffrement dudit au moins un destinataire,
- déterminer (406) si ledit au moins un destinataire est autorisé à accéder audit élément d'information de charge utile chiffré,
- envoyer ou déclencher envoyer (407) ladite deuxième clé de déchiffrement audit au moins un destinataire en réponse à ladite demande, où ladite deuxième clé de déchiffrement est uniquement envoyée ou déclenchée à être envoyée audit au moins un destinataire en réponse à ladite demande, s'il est déterminé que ledit au moins un destinataire est autorisé à accéder audit élément d'information de charge utile chiffré.

2. La méthode selon la revendication 1, où ledit élément d'information de charge utile chiffré (700) et/ou ladite première clé de déchiffrement chiffrée (800) sont déchiffrables au moyen d'au moins un algorithme de cryptographie asymétrique, d'au moins un algorithme de cryptographie symétrique ou d'une combinaison de ceux-ci.

3. La méthode selon l'une des revendications 1 et 2, ladite méthode comprenant en outre :
- générer ou déclencher générer ladite première clé de déchiffrement et/ou de ladite deuxième clé de déchiffrement.

4. La méthode selon l'une des revendications 1 à 3, où ladite première clé de déchiffrement et/ou ladite deuxième clé de déchiffrement sont générées au moins partiellement basé sur un générateur de nombres aléatoires ou un générateur de nombres pseudo-aléatoires de sorte que ladite première clé de déchiffrement et/ou ladite deuxième clé de déchiffrement ne sont pas connues dudit au moins un destinataire.

5. La méthode selon l'une des revendications 1 à 4, où ladite première clé de déchiffrement et/ou ladite deuxième clé de déchiffrement sont uniquement à utiliser par ledit au moins un destinataire.

6. La méthode selon l'une des revendications 1 à 4, où ladite première clé de déchiffrement et/ou ladite deuxième clé de déchiffrement sont à utiliser par une pluralité de destinataires, où ledit au moins un destinataire est l'un de la pluralité de destinataires, et où ledit élément d'information de charge utile est à communiquer à ladite pluralité de destinataires.

7. La méthode selon l'une des revendications 1 à 6, où ladite détermination de si ledit au moins un destinataire est autorisé à accéder audit élément d'information de charge utile est au moins partiellement basée sur un élément d'information d'authentification contenu dans ladite demande pour authentifier ledit au moins un destinataire, un élément d'information d'identification contenu dans ladite demande pour identifier ledit au moins un destinataire, une durée de validité dudit élément d'information de charge utile, une durée de validité de ladite première clé de déchiffrement et/ou de ladite deuxième clé de déchiffrement, une validité géographique de ladite première clé de déchiffrement et/ou de ladite deuxième clé de déchiffrement ou une combinaison de ceux-ci.

8. La méthode selon l'une des revendications 1 à 7, où ledit message (900) contenant ledit élément d'information de charge utile chiffré contient en outre au moins l'un des éléments suivants :
- un élément d'information de signature,
- un élément d'information de destinataire,
- un élément d'information de clé,
- un élément d'information de chiffrement, et
- un élément d'information de politique de message.

9. Un dispositif, ledit dispositif comprenant des moyens (101-105, 201-204) pour effectuer la méthode selon l'une des revendications 1 à 8.

10. Un code de programme informatique, ledit code de programme informatique lorsqu'il est exécuté par un processeur amenant un dispositif à effectuer les actions de la méthode selon l'une des revendications 1 à 8.

11. Un système, ledit système comprenant :
- au moins un dispositif (100) comprenant des moyens pour effectuer la méthode selon l'une des revendications 1 à 8, et
- au moins un dispositif supplémentaire (200-1, 200-2) comprenant des moyens pour effectuer une méthode comprenant :
- recevoir (501) un message (900) contenant un élément d'information de charge utile chiffré (700) qui est déchiffrable au moyen d'une première clé de déchiffrement, ledit message (900) contenant en outre une première clé de déchiffrement chiffrée (800) qui est déchiffrable au moyen d'une deuxième clé de déchiffrement, où l'accès à ladite deuxième clé de déchiffrement est contrôlé par un expéditeur dudit message,
- obtenir (502) ladite deuxième clé de déchiffrement,
- obtenir (503) ladite première clé de déchiffrement en déchiffrant ladite première clé de déchiffrement chiffrée au moyen de ladite deuxième clé de déchiffrement, et
- déchiffrer (504) ledit élément d'information de charge utile chiffré (700) au moyen de ladite première clé de déchiffrement.

12. Le système selon la revendication 11, où ladite deuxième clé de déchiffrement est obtenue par :
- envoyer ou déclencher envoyer (5021) une demande de ladite deuxième clé de déchiffrement à un expéditeur dudit message (900) contenant ledit élément d'information de charge utile chiffré, et
- recevoir (5022) ladite deuxième clé de déchiffrement dudit expéditeur en réponse à ladite demande.
